# EUROPEAN PATENT APPLICATION

(11) **EP 1 143 642 A1**
(43) Date of publication of application: **10.10.2001**
(21) Application number: 00302983.2
(22) Date of filing: 07.04.2000
(51) Int. Cl.: H04B 10/152, H04B 10/207

(54) **Adjustment of optical transmitter level in optical network units**

(71) Applicant: LUCENT TECHNOLOGIES INC., Murray Hill, New Jersey 07974-0636 (US)
(72) Inventor: Jonk, Kasper Jan, 3818 LV Amersfoort (NL); Van Dijk, Huib J., 3751 XG Bunschoten (NL); Van de Peut, Teunis, 3831 JD Leusden (NL)
(74) Representative: Williams, David John

(57) **Abstract**

Method of and apparatus for communicating in an optical network using an optical network unit, the method including the following steps carried out by said optical network unit:
- receiving an input optical signal with an input optical signal intensity;
- transmitting an output optical signal with an output optical signal intensity:
- generating a feedback signal with information as to the input optical signal intensity; and
- controlling said output optical signal intensity in dependence on said feedback signal.

## Description

### Field of the invention

The present invention relates to an optical network unit comprising a receiver for receiving an input optical signal with an input optical signal intensity, and a transmitter for transmitting an output optical signal with an output optical signal intensity.

### Prior Art

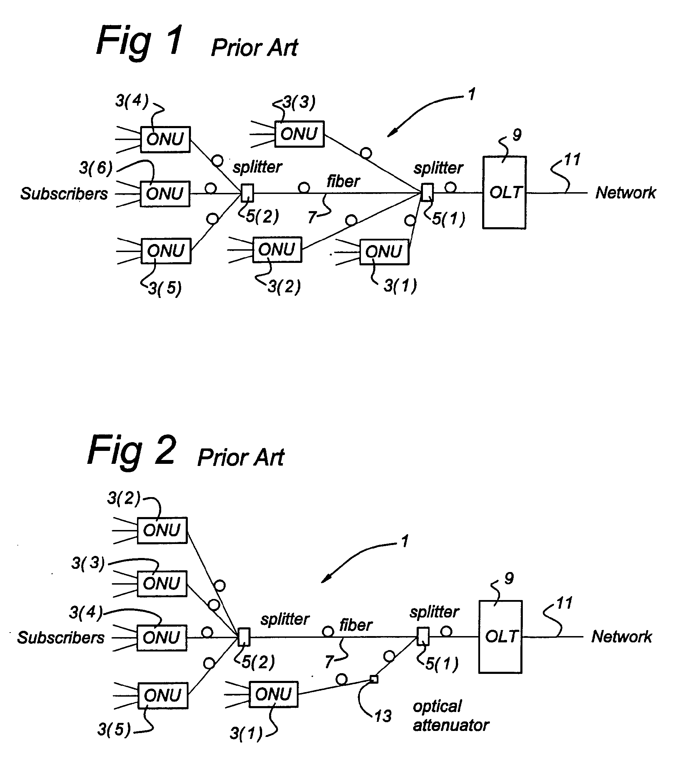

Such optical network units are widely used either in optical wired networks. An example of a wired optical access network according to the prior art is shown in figure 1. The optical access network 1 shown in figure 1 comprises optical fibres 7 interconnecting a plurality of optical network units 3(i), i=1, 2, 3, ..., and an optical line terminal 9. Several optical network units may be connected to a splitter, two of which 5(1), 5(2) being shown in figure 1. As is known to a person skilled in the art, the optical line terminal 9 is also connected to a communication network 11. This communication network may be any type of communication network, for instance an ATM network, the public switched telephone network, etc.

Each of the optical network units 3(i) is connected to one or more subscribers (not shown). Optical access networks as shown in figure 1 are for instance defined in ITU-T recommendation G.982. Figure 1 is a simplified representation of such an optical access network.

Such an optical access network is classified according to its "optical path loss" between the optical line terminal 9 and the attached optical network units 3(i). The difference between "minimum optical pass loss" and "maximum optical path loss" is the dynamic range of the optical access network. The dynamic range is typically in the order of 15 dB, see table 1 below. This dynamic range is typically determined by optical receiver performance in the optical network units 3(i) and the optical line terminal 9.

**Table 1:**

| Network classes vs. optical loss | | | |
|---|---|---|---|
| | Class A | Class B | Class C |
| minimum loss [dB] | 5 | 10 | 15 |
| maximum loss [dB] | 20 | 25 | 30 |
| dynamic range [dB] | 15 | 15 | 15 |

The maximum optical path loss is determined by the total loss caused by fibre span in the optical access network 1 and loss due to the optical splitters 5(1), 5(2). The class C optical access network puts the severest technical requirements on the components used in the optical access network 1, in particular, optical receivers used in the optical network units and the optical line terminal 9. For a receiver in an optical network unit 3(i), (some) stringent and severe requirements are:
1. receiver sensitivity (dealing with maximum loss);
2. overload level of receiver (dealing with minimum loss).

A receiver of the optical line terminal 9 has the same requirements. However, additionally the optical line terminal 9 has to deal with a variation of received optical signals from all attached optical network units 3(i) while still guaranteeing a maximum usable upstream bandwidth, i.e., from the optical network units 3(i) to the optical line terminal 9.

The ITU-T recommendation G.982 prescribes that an optical access network without using any splitter is allowed to span up to 40 kilometers. At maximum, a split ratio of 32 may be used, however, then the maximum optical access network span is 20 kilometers.

In an optical access network 1 with one or more optical network units 3(i) located at such a maximum distance, which corresponds with maximum loss, it is required to put an optical attenuator 13 in front of an optical network unit 3(1 ) which is located close to the optical line terminal 9 in case it exceeds the limits of a Class B or Class C optical network. This is shown in figure 2 which is also known from the prior art. In figure 2 like reference numbers refer to like components as in figure 1.

In this case the optical attenuator 13 is required in order not to overload both an optical receiver in the optical network unit 3(1) as well as an optical receiver in the optical line terminal 9. In a single fibre system (bi-directional) a single optical attenuator attenuates both a received optical signal towards the optical network unit 3(1) as well as a transmitted optical signal towards the optical line terminal 9.

A primary object of the invention is to avoid the need of using optical attenuators in the communication path between an optical network unit and the optical line terminal.

### Summary of the invention

To obtain this object, the optical network unit as defined at the outset, comprises a feedback circuit arranged to receive a feedback input signal from the receiver comprising information as to the input optical signal intensity and arranged to output a feedback optical signal to the transmitter in dependence on the feedback input signal, the transmitter being arranged to control the output optical signal intensity in dependence on the feedback output signal.

By applying these features, there is no need for extra physical space for any optical attenuator between an optical network unit and the optical line terminal. Moreover, costs may be reduced and administrative burden of planning where to install or keeping track of where optical attenuators have to be installed may be avoided. Since attenuators add an additional glass-air-glass interface which is sensitive for moisture, the solution also decreases failure rate of fibre connections. Finally, some of the laser transmitting diodes in the optical network units may reduce their output optical signal intensity, thus increasing the laser lifetime.

In a preferred embodiment the transmitter is arranged to transmit on one of a plurality of consecutive discrete output optical signal intensities, such that the higher is the input optical signal intensity the lower is the output optical signal intensity controlled by the feedback circuit and vice versa.

In such an arrangement it is preferred that changing from an output optical signal intensity to a next output optical signal intensity is carried out with a predetermined hysteresis.

Although optical network units as defined above may be used in optical wireless networks, they are preferably used in an optical access network comprising an optical line terminal and at least one such optical network unit, the optical line terminal and the optical network units being connected to one another by means of a glass fibre network.

In such an optical access network, each of the network units may be arranged to receive said input optical signal with a predetermined input intensity variation of less than X dB, each of said feedback circuits being arranged to control the output optical signal intensity of each of said network units in such a way that each optical signal transmitted by either one of the optical network units upon receipt by said optical line terminal has an intensity within a predetermined intensity range, said intensity range having a variation of at most X-Y dB, X-Y ≥ 0. Then, that predetermined intensity range has less variation than the maximum variation in optical signal intensity in opposite direction between the optical line terminal and any of the optical network units. Suitable values are X=20 and Y=10. However, smaller values are envisaged for future networks. In such a case an optical line terminal needs less time, and therefore less bandwidth, for adjusting its automatic gain control stage. A smaller pre-amble is needed, thus, maximizing usable bandwidth and facilitating using higher communication frequencies.

The present invention also relates to a method of communicating in an optical network using an optical network unit, the method comprising the following steps carried out by the optical network unit:
- receiving an input optical signal with an input optical signal intensity;
- transmitting an output optical signal with an output optical signal intensity:
wherein the method also comprises the following step:
- generating a feedback signal comprising information as to the input optical signal intensity; and
- controlling the output optical signal intensity in dependence on the feedback signal.

### Drawings

The present invention will now be illustrated with reference to some drawings which are only intended to illustrate the present invention and not to limit its scope.
Figure 1 shows a simplified representation of an optical access network known from the prior art;
figure 2 is a class C optical access network with one optical network unit located close to the optical line terminal, as known from the prior art;
figure 3A shows a timing diagram of the transmission of a plurality of messages by different optical network units and the use of pre-ambles necessary for the optical line terminal to set its automatic gain control circuit; this figure is known as such from the prior art;
figure 3B shows a timing diagram similar as figure 3A but amended in accordance with he present invention;
figure 4 shows a block diagram of a standard optical network unit known from the prior art;
figure 5 shows a block diagram of an optical network unit in accordance with the present invention;
figures 6 through 9 show different embodiments of the optical network unit as shown in figure 5, and
figure 10 shows the principle of applying hysteresis when switching from one output optical signal intensity to another output optical signal intensity.

Figures 1 and 2 have been discussed above.

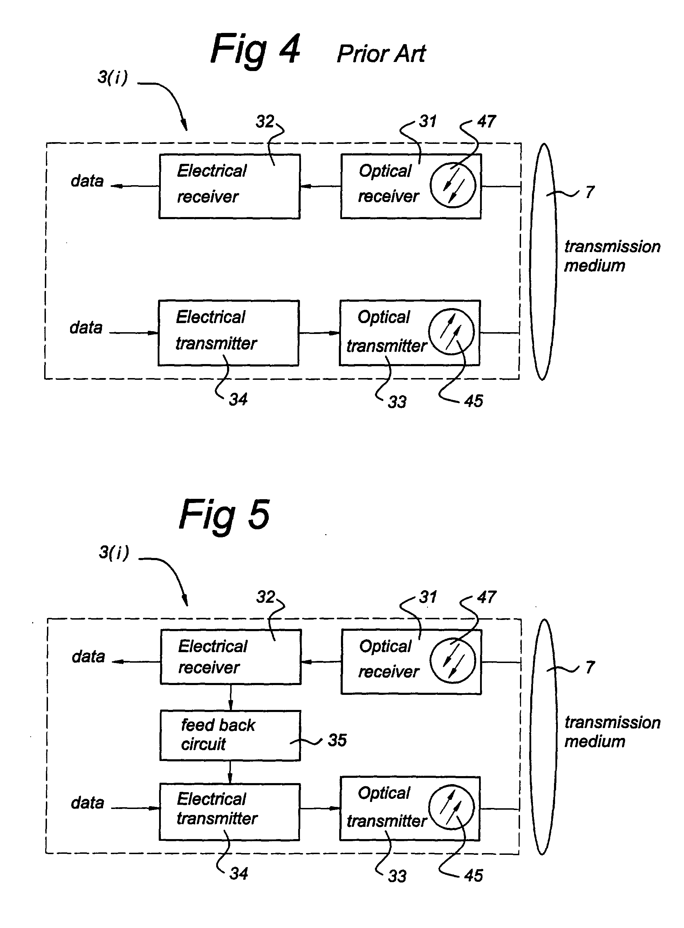

Now, first of all, figure 4 will be explained. Figure 4 shows an optical network unit 3(i) according to the prior art, provided with a receiver comprising an optical receiver 31 and an electrical receiver 32 connected to the optical receiver 31. The optical receiver 31 is connected to an input of the optical network unit 3(i) and comprises a converter unit 47 for receiving an optical signal from the input and converting it into an electrical signal. Such a converter unit may be a pin diode as is known to persons skilled in the art.

The electrical receiver 32 receives the electrical signal from the optical receiver 31 and deduces relevant data from the electrical signal and transmits the data to one or more subscribers.

The optical network unit 3(i) comprises a transmitter comprising an electrical transmitter 34 and an optical transmitter 33 connected to the output of the electrical transmitter 34. The optical transmitter has an output for transmitting an output optical signal. The optical transmitter 33 comprises a converter unit 45 for converting an electrical signal into an optical signal, as is known to persons skilled in the art. Such a converter may be a laser diode.

The electrical transmitter 34 receives data from one or more subscribers and transmits these data in a predetermined format to the optical transmitter 33. The input and output of the optical network unit 3(i) are connected to a transmission medium which, in accordance with the prior art, may be an optical fibre 7, e.g., a single fibre used bi-directionally or two fibres both used uni-directionally.

The optical line terminal 9 also comprises a receiver and a transmitter (both not shown) like the optical network units.

Prior art optical transmitters 33 are transmitting on a fixed, predetermined level. Thus, especially when the receiver in an optical network unit has a wide dynamic range and the optical network unit is arranged close to the optical line terminal 9, and the receiver in the optical line terminal 9 has a standard dynamic range an optical signal transmitted by such an optical network unit may overload the optical line terminal receiver. As explained above, with reference to figure 2, such a problem may be solved by installing an optical attentuator 13 between the optical network unit concerned and the optical line terminal 9.

However, in accordance with the present invention no optical attenuator 13 is installed but the output optical signal intensity of the optical network unit 3(i) is controlled automatically. This will be explained with reference to figure 5.

Like reference numbers in figure 5 refer to like components as in figure 4. In accordance with the present invention a feedback circuit 35 is provided between the receiver 31, 32 and the transmitter 33, 34. In a practical embodiment, the feedback circuit 35 is connected between the electrical receiver 32 and the electrical transmitter 34. The feedback circuit 35 receives a feedback input signal from the electrical receiver 32 and generates a feedback output signal for the electrical transmitter 34. The feedback circuit 35 is arranged to control the output optical signal intensity in dependence on the input optical signal intensity at a predetermined level. The invention is based on the insight that, in an optical access network 1, the output power of the optical line terminal 9 is defined to be within a small predetermined range. Thus, from the input optical signal intensity received the feedback circuit 35 is able to determine the path loss between the optical network unit 3(i) and the optical line terminal 9 and thus to determine the required output optical signal intensity.

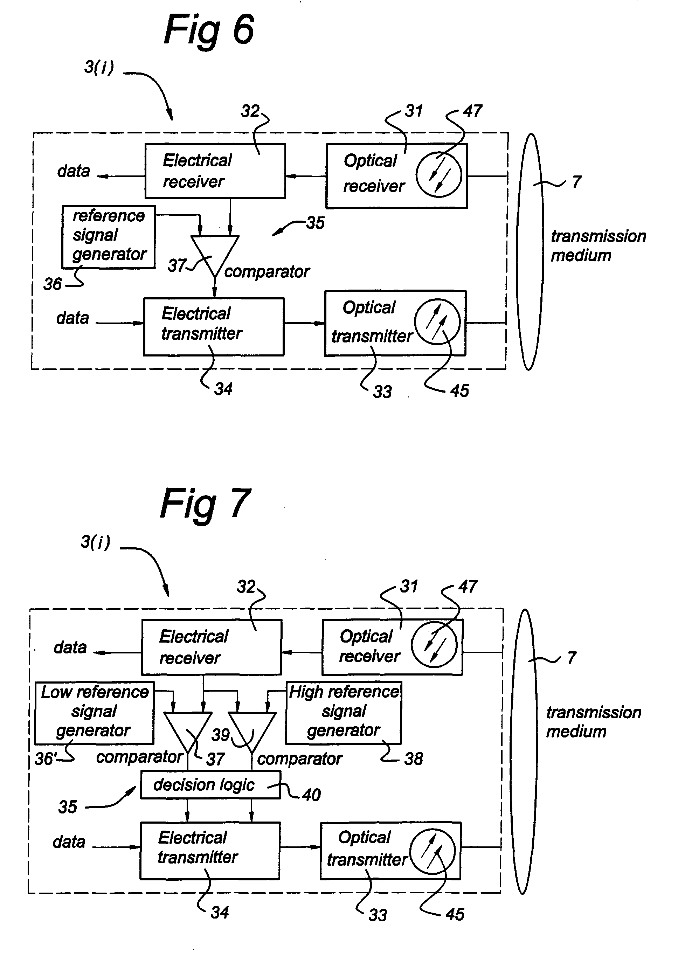

Figure 6 shows a first embodiment of the feedback circuit 35. In figure 6, the feedback circuit 35 comprises a comparator 37 and a reference signal generator 36. The electrical receiver 32 produces the feedback input signal which is proportional to the received input optical signal intensity. The output of the comparator 37 has two possible values: the first value is related to the situation in which the feedback input signal is higher than the reference signal generated by the reference signal generator 36 and the second value is related to the situation in which the feedback input signal is lower than the reference signal generated by the reference signal generator 36. The electrical transmitter 34 is arranged such that the output optical signal intensity is switched between two preset values in dependence on whether the output of the comparator 37 has its first or second value. The total arrangement is such that when the feedback input signal exceeds the reference signal value, the output optical signal intensity is lower than when the feedback input signal is lower than the reference signal value.

Figure 7 shows an improved embodiment of the arrangement according to figure 6. The arrangement of figure 6 has only one point at which the circuit switches from high-to-low output optical signal intensity and vice versa. This might result in undesired modulation of the output signal. Usually, in optical access networks requirements exist for resilience against received optical level fluctuations within a certain range. This also implies that the optical output level should not vary as a result of this phenomenon, in particular at the decision level of the comparator 37.

The arrangement in accordance with figure 7 overcomes this problem by introducing a certain amount of hysteresis.

In the arrangement according to figure 7, there is a second comparator 39 which receives the same feedback input signal as comparator 37 from the electrical receiver 32. The second comparator 39 is also connected to a high reference signal generator 38 which produces a high reference signal. Comparator 37 is connected to a low reference signal generator 36' which produces a low reference signal. The low reference signal corresponds with a lower intensity than the high reference signal.

The outputs of comparators 37 and 39 are connected to a decision logic unit 40. The decision logic 40 is arranged such that the transition of the optical network unit output from high-to-low is made when the feedback input signal decreases below the low reference signal value whereas the decision to switch from low-to-high is taken when the feedback input signal increases above the high reference signal value. Table 2 below shows the logic decisions to be made by the decision logic unit 40.

**Table 1:**

| Decision matrix | | |
|---|---|---|
| Low-level Comparator | High-level Comparator | Optical output level |
| level < threshold | level < threshold | high level |
| level < threshold | level > threshold | - (impossible) |
| level > threshold | level < threshold | no change (hysteresis) |
| level > threshold | level > threshold | low level |

Preferably, the distance between the high reference signal value and the low reference signal value is equal to the requirement for optical level fluctuation resiliency.

The decision logic 40 may be implemented by any logic circuitry, however, one or more software controlled processors may also be applied.

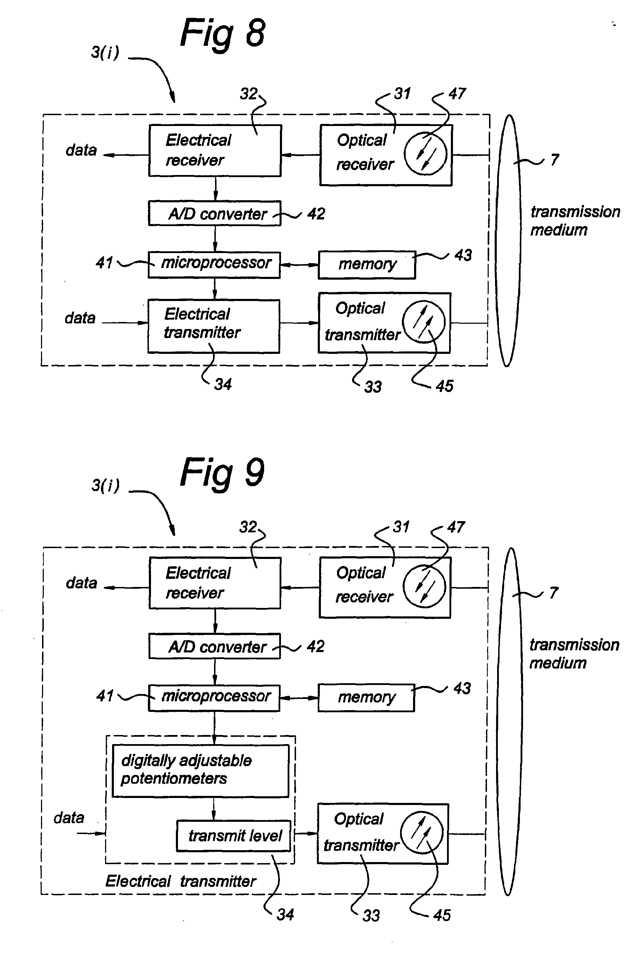

A further refinement of the circuit shown in figure 7 may be obtained by the circuit shown in figure 8. In figure 8, a microprocessor 41 and an analogue-to-digital converter 42 are arranged between the electrical receiver 32 and the electrical transmitter 34. The microprocessor 41 is connected to a memory 43. The memory 43 stores two or more programmed thresholds. In one embodiment the microprocessor 41 comprises firmware that compares the digitized level of the feedback input signal received from the electrical receiver 32 with the two or more stored thresholds. The number of thresholds in this firmware solution can be far greater than two. Actually, the optical transmitter characteristic could be represented in, for instance, 100 threshold values, each representing a different output optical signal intensity. The greater the number of threshold values, the closer the optical received level at the optical line terminal 9 can be controlled around a predetermined constant value.

The memory 43 is preferably a non-volatile memory. However, other types of memory known from the prior art, such as ROM, may be used instead.

The microprocessor 41 is shown as one single block. However, as is known to persons skilled in the art, the microprocessor 41 may be implemented as two or more processors for instance in a parallel operating arrangement or in a master-slave arrangement, as the case may be.

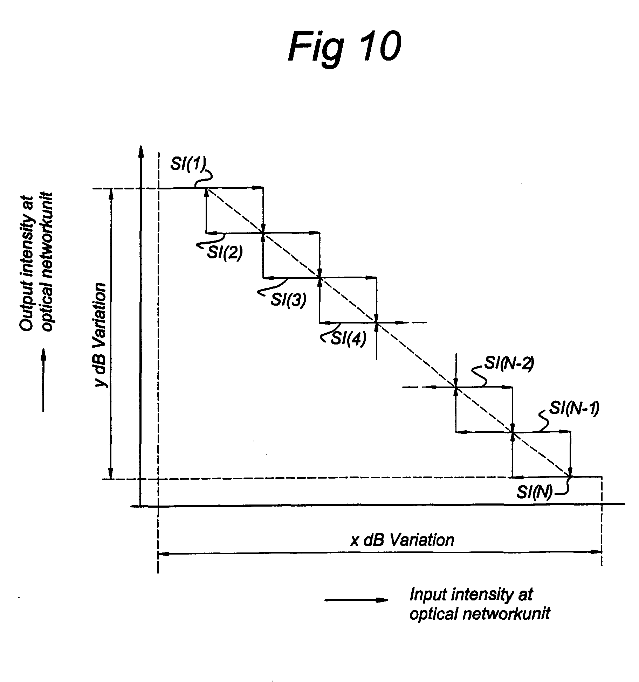

Preferably, the microprocessor 41 is programmed to control the switching between adjacent output optical signal intensities by using hysteresis, as schematically shown in figure 10.

Figure 10 schematically shows a number of possible input optical signal intensity ranges received by the optical network unit SI(n), n = 1, 2, 3, ..., N; N>=2, and the corresponding discrete output optical signal intensities as transmitted by the optical network unit. Switching the output optical signal intensity from a certain level to a lower level is always done at a higher input threshold value than switching back from the lower level to the next higher level.

It is observed that a completely analogue feedback circuit could be used instead to obtain the same results provided that such an analogue feedback circuit has a large time constant, as is known to persons skilled in the art.

Optical network units now manufactured by the applicant of the present invention comprise digitally adjustable potentiometers 49 in the electrical transmitter 34, as shown schematically in figure 9. The output of the digitally adjustable potentiometers 49 are connected to a transmit level circuitry 51 that controls the output optical signal intensity produced by the laser 45. These digitally adjustable potentiometers 49 can be directly connected to the microprocessor 41.

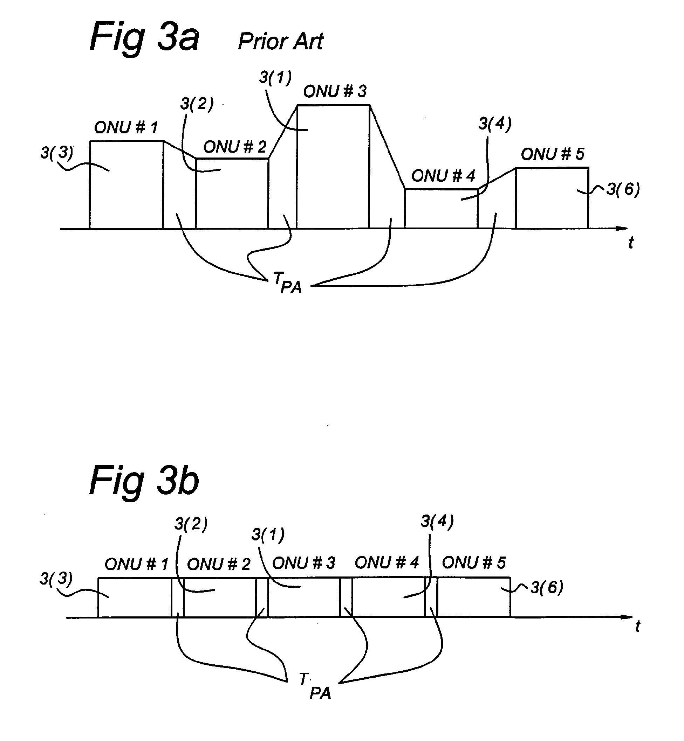

When, in an optical access network 1, all optical network units 3(i) are arranged in accordance with the present invention, the pre-amble period between consecutive messages transmitted in the network may be substantially shortened. Alternatively, the same network may be used to substantially increase the communication frequency used. This will be explained with reference to figures 3A en 3B.

Figure 3A shows a situation at the optical line terminal 9 receiving five consecutive messages from the optical network units 3(3), 3(2), 3(1), 3(4), and 3(6), respectively. In accordance with the arrangement of the prior art as shown in figure 4, the closer the optical network unit concerned is to the optical line terminal 9, the higher will be the signal intensity received at the optical line terminal 9. The optical line terminal 9 comprises an automatic gain control circuit (not shown) that needs some time to regulate the desired gain in dependence on the signal level received. Therefore, it is required to have a pre-amble period between consecutive messages. The pre-amble period has a duration of T_{PA}. If this time period T_{PA} is too short, the automatic gain control circuit of the optical line terminal 9 is unable to regulate its gain to the desired level. Therefore, this pre-amble has a minimum time determined by the optical line terminal circuitry.

In accordance with the present invention, preferably, each of the optical network units 3(i) is controlled such that the optical signal intensity received at the optical line terminal 9 is within a predetermined small range. This small range has a range minimum and a range maximum differing in such a way that this range has less variation than the maximum variation in optical signal intensity in opposite direction between optical line terminal 9 and any optical network unit 3(i). For instance, in a network the optical network units 3(i) may be arranged to receive an input optical signal with an intensity variation of up to X dB. E.g., X=20. This intensity variation results in the feedback circuits of the optical network units 3(i) to control the output optical signals at such levels that these output signals upon receipt by the optical line terminal 9 have intensity variations in a range of X-Y dB, X-Y ≥ 0 and in which, e.g., Y=10. Thus, with a certain intensity variation of the signals arriving at the optical network units 3(i) from the optical line terminal 9, the feedback circuits will control the output signals such that the signals arriving at the optical line terminal 9 from the network units 3(i) have a smaller intensity variation. Thus, less time will be needed by the automatic gain control circuitry of the optical line terminal 9 to adjust its gain between two consecutive messages received from different optical network units. Figure 3B shows an ideal situation in which messages received from different optical network units has substantially the same optical signal intensity upon arrival at the optical line terminal 9. Thus, the duration T_{PA} of the pre-ambles can be shortened and more bandwidth will be available for transmitting messages.

Nowadays, in optical access networks messages are transmitted with a rate of 155 Mbit per second. However, it is envisaged that in the near future a rate of 622 Mbit per second will be used. This is an increase by a factor 4. Since it is much more difficult to increase the adjustment speed of the automatic gain control circuitry within the optical line terminal 9 by a factor of 4, using the optical network units according to the prior art would still require pre-amble periods of T_{PA} of unamended duration. This is feasible with the prior art, however, the protocol would have to be changed, since the preamble period would have four times as many bits as in the present situation.

This latter problem is also solved with the present invention. Since the actual time T_{PA} required with using optical network units in accordance with the present invention can be decreased significantly, the pre-amble can be realized with the same number of bits in the network with a communication rate of 622 Mbit per second as nowadays used with the communication rate of 155 Mbit per second.

Moreover, then, the optical line terminal 9 can be realized cheaper since the required dynamic ranged is decreased.

## Claims

1. Optical network unit comprising a receiver (31, 32) for receiving an input optical signal with an input optical signal intensity, and a transmitter (33, 34) for transmitting an output optical signal with an output optical signal intensity, wherein the optical network unit comprises a feedback circuit (35) arranged to receive a feedback input signal from said receiver (31, 32) comprising information as to the input optical signal intensity and arranged to output a feedback output signal to said transmitter (33, 34) in dependence on said feedback input signal, said transmitter (33, 34) being arranged to control said output optical signal intensity in dependence on said feedback output signal.

2. Optical network unit according to claim 1, wherein said transmitter (33, 34) is arranged to transmit on one of a plurality of consecutive discrete output optical signal intensities, such that the higher is the input optical signal intensity the lower is the output optical signal intensity controlled by the feedback circuit (35) and vice versa.

3. Optical network unit according to claim 2, wherein changing from an output optical signal intensity to a next output optical signal intensity is carried out with a predetermined hysteresis.

4. Optical network unit according to claim 1, 2 or 3, wherein said feedback circuit (35) comprises a comparator (37) and a reference signal generator (36) for providing a reference signal to said comparator (37), said comparator (37) being arranged to compare said feedback input signal with said reference signal and to generate said feedback output signal.

5. Optical network unit according to claim 1, 2 or 3, wherein said feedback circuit (35) comprises a first comparator (37) and a low reference signal generator (36) for providing a low reference signal to said first comparator (37), said first comparator (37) being arranged to compare said feedback input signal with said low reference signal and to generate a first comparator output signal, and a second comparator (39) and a high reference signal generator (38) for providing a high reference signal to said second comparator (39), said second comparator (39) being arranged to compare said feedback input signal with said high reference signal and to generate a second comparator output signal, and a decision logic unit (40) arranged to receive both said first and second comparator output signals and to generate said feedback output signal.

6. Optical network unit according to any of the preceding claims, wherein said receiver comprises an optical receiver (31) and an electrical receiver (32), the electrical receiver (32) having an input connected to said optical receiver (31) and being arranged to generate said feedback input signal, and said transmitter comprises an electrical transmitter (34) and an optical transmitter (33), the electrical transmitter having an output connected to said optical transmitter (33) and being arranged to receive said feedback output signal.

7. Optical network unit according to claim 6, wherein said feedback circuit comprises a microprocessor (41) arranged to receive said feedback input signal and to generate said feedback output signal.

8. Optical network unit according to claim 7, wherein said optical transmitter (33) comprises a laser unit (45) for providing said output optical signal, said electrical transmitter comprises at least one digitally adjustable potentiometer providing a control signal to said laser unit (45) to control said output optical signal intensity.

9. Optical access network comprising at least one optical network unit according to one of the preceding claims, and an optical line terminal (9), wherein said at least one optical network unit (3(i), i= 1, 2, 3, ...) and said optical line terminal (9) are connected to one another by means of a glass fiber network.

10. Optical access network according to claim 9 with a plurality of optical network units (3(i), i= 1, 2, 3, ...), each of the network units being arranged to receive said input optical signal with a predetermined input intensity variation of less than X dB, each of said feedback circuits being arranged to control the output optical signal intensity of each of said network units in such a way that each optical signal transmitted by either one of the optical network units (3(i)) upon receipt by said optical line terminal (9) has an intensity within a predetermined intensity range, said intensity range having a variation of at most X-Y dB, X-Y ≥ 0.

11. Optical access network according to claim 10, wherein X = 20.

12. Optical access network according to claim 10 or 11, wherein X-Y = 10.

13. Method of communicating in an optical network using an optical network unit, the method comprising the following steps carried out by said optical network unit:
• receiving an input optical signal with an input optical signal intensity;
• transmitting an output optical signal with an output optical signal intensity:
wherein the method also comprises the following step:
• generating a feedback signal comprising information as to the input optical signal intensity; and
• controlling said output optical signal intensity in dependence on said feedback signal.

14. Method according to claim 12, comprising the step of controlling said output optical signal intensity on one of a plurality of consecutive discrete output optical signal intensities, such that the higher is the input optical signal intensity the lower is the output optical signal intensity and vice versa.

15. Method according to claim 14, wherein changing from an output optical signal intensity to a next output optical signal intensity is carried out with a predetermined hysteresis.
